# EUROPÄISCHE PATENTSCHRIFT

(11) **EP 1 681 265 B1**
(45) Veröffentlichungstag und Bekanntmachung des Hinweises auf die Patenterteilung: **20.10.2010**
(21) Anmeldenummer: 05005929.4
(22) Anmeldetag: 18.03.2005
(51) Int. Cl.: C01B 33/18, B01J 13/00, C09K 3/14

(54) **Pyrogen hergestellte Siliciumdioxidpulver und Dispersion hiervon**
Pyrogenic silica and dispersion thereof
Silice pyrogénique et dispersion la contenant

(30) Priorität: 12.01.2005 DE 102005001410
(43) Veröffentlichungstag der Anmeldung: 19.07.2006
(73) Patentinhaber: Evonik Degussa GmbH, 45128 Essen (DE)
(72) Erfinder: Schumacher, Kai, Dr., 65719 Hofheim (DE); Jacobsen, Hauke, Dr., Mobile, AL 36609 (US); Brandes, Ralph, Dr., Princeton, NJ 08540 (US); Shibasaki, Takeyoshi, Dr., Nerima-ku, Tokyo 078-0062 (JP); Ishibashi, Naruyasu, Yokkaichi Mie 510-0074 (JP)

(56) Entgegenhaltungen:
- EP-A- 0 855 368
- EP-A- 1 486 461
- WO-A-2005/095503
- DE-A1- 10 258 857
- DE-A1- 10 258 858

## Beschreibung

Die Erfindung betrifft ein pyrogen hergestelltes Siliciumdioxidpulver, dessen Herstellung und Verwendung. Die Erfindung betrifft weiterhin eine Dispersion, welche das pyrogen hergestellte Siliciumdioxidpulver enthält.

Die Flammenhydrolyse zur Herstellung von Siliciumdioxid ist ein seit langem bekanntes, großtechnisch durchgeführtes Verfahren. Bei diesem Verfahren wird ein verdampftes oder gasförmiges hydrolysierbares Siliciumhalogenid mit einer Flamme vermengt, die durch Verbrennung eines wasserbildenden, Wasserstoff enthaltenden Brennstoffs und eines sauerstoffhaltigen Gases gebildet worden ist. Die Verbrennungsflamme stellt dabei Wasser für die Hydrolyse des Siliciumhalogenides und genügend Wärme zur Hydrolysenreaktion zur Verfügung. Das in den Restgasen der Reaktion mitgetragene Siliciumdioxidpulver wird üblichen Kühl- und Feststofftrennverfahren unterworfen. Gewöhnlich wird Siliciumtetrachlorid eingesetzt. Es ist jedoch auch bekannt Dichlorsilan oder Trichlorsilan einzusetzen. Beim Einsatz von kohlenstoffhaltigen Einsatzstoffen, wie beispielsweise Methyltrichlorsilan, Dimethyldichlorsilan, Methyldichlorsilan, Dibutyldichlorsilan, Äthyltrichlorsilan, Propyltrichlorsilan findet zusätzlich ein Oxidationsprozess zur Überführung des Kohlenstoffes in Kohlendioxid statt.

In Folge wird ein Siliciumdioxidpulver, welches bei einem Verfahren bei dem beide Reaktionstypen, nämlich Flammenhydrolyse und Oxidation, ablaufen, gebildet wird, als ein pyrogen hergestelltes Siliciumdioxid bezeichnet.

Bei der Reaktion werden zunächst hochdisperse, nicht poröse Primärpartikel gebildet, die im weiteren Reaktionsverlauf zu Aggregaten zusammenwachsen und diese sich weiter zu Agglomeraten zusammenlagern können. Die BET-Oberfläche dieser Primärpartikel liegt in der Regel zwischen 5 und 600 m²/g. Das Pulver weist auf seiner Oberfläche freie Hydroxylgruppen auf.

Dokument EP 1 486 461 offenbart ein "Verfahren zur Herstellung eines Siliciumdioxidpulvers, welches dadurch gekennzeichnet ist, daß man mindestens einen dampfförmigen Siliciumdioxid-Precursor in Gegenwart eines freien Sauerstoff enthaltenden Gases, eines Brenngases und Wasserdampf verbrennt" (Siehe Seite 3, Zeile 3-5).

Dokument DE 102 58 857 offenbart ein pyrogen hergestelltes Siliciumdioxidpulver mit einer BET-Oberfläche von 30 bis 90 m²/g, einer mittleren Aggregatfläche von weniger als 25000 nm²_{.}

Dazu beschreibt das Dokument WO 2005/095503 die Verwendung von pyrogen hergestelltem Siliciumdioxid mit einer BET-Oberfläche von 90+/-15 m².

Das so hergestellte Siliciumdioxidpulver findet in vielen Anwendungsbereichen Verwendung. Von besonderer Bedeutung ist die Verwendung als Abrasiv in wässerigen Dispersionen zum chemisch-mechanischen Polieren von Oberflächen. Ein wesentlicher Kostenfaktor ist hierbei die Zeit, die für die Einarbeitung in das flüssige Medium benötigt wird. Es hat sich gezeigt, dass für Siliciumdioxidpulver nach dem Stand der Technik, obwohl sie nach dem gleichen Reaktionstyp hergestellt wurden und auch gleiche oder ähnliche der üblicherweise zur Charakterisierung angegebenen Parameter, wie beispielsweise die BET-Oberfläche, aufweisen, sehr lange Einarbeitungszeiten in flüssige Medien erforderlich sind.

Aufgabe der Erfindung ist es daher, ein Siliciumdioxidpulver bereitzustellen, das sich schnell in flüssige Medien einarbeiten läßt.

Aufgabe der Erfindung ist weiterhin ein Verfahren zur Herstellung dieses Pulvers bereitzustellen.

Aufgabe der Erfindung ist weiterhin eine Dispersion dieses Pulvers bereitzustellen. Sie soll insbesondere beim chemisch-mechanischen Polieren zu einer Minimierung der Kratzer auf der zu polierenden Oberfläche führen.

Gegenstand der Erfindung ist ein pyrogen hergestelltes Siliciumdioxidpulver in Form von Aggregaten von Primärpartikeln, welches
- eine BET-Oberfläche von 90 ± 15 m²/g besitzt, und bei dem die Aggregate
- eine mittlere Fläche von 10000 - 20000 nm²,
- einen mittleren, äquivalenten Kreisdurchmesser (ECD = Equivalent Circle Diameter) von 90 - 130 nm und
- einen mittleren Umfang von 1000 - 1400 nm aufweisen.

Dabei wird die BET-Oberfläche bestimmt nach DIN 66131.

Die Aggregatgrößen werden durch Bildanalyse mittels eines TEM Gerätes der Fa. Hitachi H 7500 und einer CCD-Kamera MegaView II, der Fa. SIS bestimmt. Die Bildvergrößerung zur Auswertung beträgt 30000:1 bei einer Pixeldichte von 3,2 nm. Die Anzahl der ausgewerteten Teilchen ist größer als 1000. Die Präparation erfolgt gemäss ASTM3849-89. Die untere Schwellwertgrenze in bezug auf Detektion liegt bei 50 Pixeln.

Die BET-Oberfläche kann bevorzugt 90 ± 10 m²/g und besonders bevorzugt 90 ± 5 m²/g sein.

Weiterhin kann ein erfindungsgemäßes pyrogen hergestelltes Siliciumdioxidpulver bevorzugt sein, bei dem die Aggregate
- eine mittlere Fläche von 12000 - 18000 nm²,
- einen mittleren, äquivalenten Kreisdurchmesser von 100 - 125 nm und
- einen mittleren Umfang von 1100 - 1300 nm aufweisen.

Weiterhin kann ein erfindungsgemäßes pyrogen hergestelltes Siliciumdioxidpulver bevorzugt sein, bei dem der maximale Aggregatdurchmesser zwischen 200 und 250 nm und der minimale Aggregatdurchmesser zwischen 100 und 155 nm ist.

Weiterhin kann ein erfindungsgemäßes pyrogen hergestelltes Siliciumdioxidpulver bevorzugt sein, bei dem der Chloridgehalt kleiner als 250 ppm ist. Besonders bevorzugt ist ein Chloridgehalt von weniger als 50 ppm.

Weiterhin kann ein erfindungsgemäßes pyrogen hergestelltes Siliciumdioxidpulver bevorzugt sein, bei dem der Kohlenstoffgehalt kleiner als 100 ppm ist. Besonders bevorzugt ist ein Kohlenstoffgehalt von weniger als 25 ppm.

Ein weiterer Gegenstand der Erfindung ist ein Verfahren zur Herstellung des erfindungsgemäßen Siliciumdioxidpulvers bei dem man
- ein Gemisch von Siliciumverbindungen, getrennt oder gemeinsam, verdampft, die Dämpfe mittels eines Traggases in eine Mischkammer überführt, mit
   - SiCl₄ als erster Komponente mit einem Anteil 60 bis 95 Gew.-% bezogen auf das Gemisch, und
   - einer zweiten Komponente ausgewählt aus der Gruppe umfassend H₃SiCl, H₂SiCl₂, HSiCl₃, CH₃SiCl₃, (CH₃)₂SiCl₂, (CH₃)₃SiCl, (n-C₃H₇)SiCl₃, mit einem Anteil von 5 bis 40 Gew.-%, bezogen auf das Gemisch,
- und getrennt hiervon ein Brenngas, Primärluft, die gegebenenfalls mit Sauerstoff angereichert und/oder vorerhitzt sein kann, in die Mischkammer überführt,
- das Gemisch aus dem Dampf der Siliciumchloride, Brenngas und Primärluft in einem Brenner zündet und die Flamme in eine Reaktionskammer hinein verbrennt,
- Sekundärluft, die die Flamme umgibt, in die Reaktionskammer einbringt, wobei das Verhältnis von Sekundärluft/Primärluft in einem Bereich von 0,1 bis 3, bevorzugt 0,25 bis 2, liegt,
- anschließend den Feststoff von gasförmigen Stoffen abtrennt, und nachfolgend den Feststoff mit Wasserdampf behandelt,
wobei
- die Gesamtmenge an Sauerstoff mindestens ausreichend ist zur vollständigen Verbrennung des Brenngases und der Siliciumverbindungen und
- die Menge der Einsatzstoffe bestehend aus Siliciumverbindungen, Brenngas, Primärluft und Sekundärluft so gewählt ist, dass eine adiabate Flammentemperatur T_{ad} von 1800 bis 1880°C resultiert, mit
   T_{ad} = Temperatur Einsatzstoffe + Summe der Reaktionsenthalpien der Teilreaktionen/ Wärmekapazität der Stoffe, die die Reaktionskammer verlassen, umfassend Siliciumdioxid, Wasser, Chlorwasserstoff, Kohlendioxid, Sauerstoff, Stickstoff, und gegebenenfalls des Traggases, wenn dieses nicht Luft oder Stickstoff ist,
wobei die spezifische Wärmekapazität dieser Stoffe bei 1000°C zugrunde gelegt wird.

Die spezifischen Wärmekapazitäten können beispielsweise mit Hilfe des VDI-Wärmeatlas (Kapitel 7.1 bis 7.3 und 3.7, 8. Auflage) ermittelt werden.

Die Umsetzung der Siliciumverbindungen in Gegenwart von Sauerstoff und eines Brenngases liefert Siliciumdioxid, Wasser, Salzsäure und bei kohlenstoffhaltigen Siliciumverbindungen und/oder kohlenstoffhaltigen Brenngasen Kohlendioxid. Die Reaktionsenthalpien dieser Reaktionen können mittels dem Fachmann bekannter Standardwerken berechnet werden.

In Tabelle 1 sind einige ausgesuchte Werte von Reaktionsenthalpien der Umsetzung von Siliciumverbindungen in Gegenwart von Wasserstoff und Sauerstoff gegeben.

Besonders bevorzugt können Methyltrichlorsilan (MTCS, CH₃SiCl₃), Trichlorsilan (TCS, SiHCl₃) und/oder Dichlorsilan (DCS, SiH₂Cl₂) eingesetzt werden.

**Tabelle 1: Reaktionsenthalpien**

| | KJ/mol |
|---|---|
| H₂ | -241, 8 |
| SiCl₄ | -620, 1 |
| SiHCl₃ | -659,4 |
| SiH₂Cl₂ | -712,3 |
| C₃H₇SiCl₃ | -2700,2 |
| CH₃SiCl₃ | -928,3 |
| (CH₃)₃SiCl | -2733,8 |

Als Brenngase eignen sich Wasserstoff, Methan, Ethan, Propan und/oder Erdgas, wobei Wasserstoff bevorzugt ist.

Die Temperatur der Einsatzstoffe ist nicht limitiert, solange sie oberhalb der Siedetemperatur der höchst siedenden Siliciumverbindung liegt. Als vorteilhaft hat sich eine Temperatur der Einsatzstoffe von 90°C ± 40°C erwiesen.

Es kann ferner von Vorteil sein, wenn die Austrittsgeschwindigkeit des Reaktionsgemisches aus der Mischkammer in die Reaktionskammer 10 bis 80 m/s ist.

Ein weiterer Gegenstand der Erfindung ist die Verwendung des erfindungsgemäßen pyrogen hergestellten Siliciumdioxidpulvers als Füllstoff in Kautschuk, Silikonkautschuk und Kunststoffen, zur Einstellung der Rheologie in Farben und Lacken, als Träger für Katalysatoren.

Ein weiterer Gegenstand der Erfindung ist eine Dispersion, enthaltend das erfindungsgemäße pyrogen hergestellte Siliciumdioxidpulver. Die flüssige Phase kann aus Wasser, organischen Lösungsmitteln oder homogenen Mischungen aus Wasser und organischen Lösungsmitteln bestehen, wobei wässerige Dispersionen, beispielsweise beim chemisch-mechanischen Polieren, bevorzugt sind.

Die erfindungsgemäße Dispersion kann bevorzugt einen Gehalt an Siliciumdioxid zwischen 5 und 60 Gew.-% aufweisen.

Der pH-Wert der erfindungsgemäßen Dispersion kann bevorzugt in einem Bereich zwischen 3 und 12 liegen. Besonders bevorzugt können Bereiche zwischen 3 und 5 und zwischen 8 und 11 sein.

Die erfindungsgemäße Dispersion kann durch die Addition von Basen oder Säuren stabilisiert werden.

Als Basen können Ammoniak, Ammoniumhydroxid, Tetramethylammoniumhydroxid, primäre, sekundäre oder tertiäre organische Amine, Natronlauge oder Kalilauge eingesetzt werden.

Als Säuren können anorganische Säuren, organische Säuren oder Mischungen der vorgenannten Verwendung finden.

Als anorganische Säuren können insbesondere Phosphorsäure, Phosphorige Säure, Salpetersäure, Schwefelsäure, Mischungen daraus, und ihre sauer reagierenden Salze Verwendung finden.

Als organische Säuren finden bevorzugt Carbonsäuren der allgemeinen Formel CₙH₂ₙ₊₁CO₂H, mit n=0-6 oder n= 8, 10, 12, 14, 16, oder Dicarbonsäuren der allgemeinen Formel HO₂C(CH₂)ₙCO₂H, mit n=0-4, oder Hydroxycarbonsäuren der allgemeinen Formel R₁R₂C(OH)CO₂H, mit R₁=H, R₂=CH₃, CH₂CO₂H, CH(OH)CO₂H, oder Phthalsäure oder Salicylsäure, oder sauer reagierende Salze der vorgenannten Säuren oder Mischungen der vorgenannten Säuren und ihrer Salze.

Besonders vorteilhaft kann die Stabilisierung der erfindungsgemäßen Dispersion durch Tetramethylammoniumhydroxid sein.

Gegebenenfalls kann die Dispersion noch weitere Additive enthalten. Dies können beispielsweise Oxidationsmittel, wie Wasserstoffperoxid oder Persäuren, Oxidationsaktivatoren enthalten, deren Zweck es ist die Oxidationsgeschwindigkeit zu erhöhen, Korrosionsinhibitoren, wie beispielsweise Benzotriazol sein. Ferner können der erfindungsgemäßen Dispersion oberflächenaktive Stoffe zugesetzt werden, die nichtionischer, kationischer, anionischer oder amphoterer Art sind.

Weiterhin kann es vorteilhaft sein, wenn die erfindungsgemäße Dispersion einen mittleren Aggregatdurchmesser in Dispersion von weniger als 200 nm aufweist. Besonders vorteilhaft kann ein mittlerer Aggregatdurchmesser von weniger als 100 nm sein.

Zur Herstellung der erfindungsgemäßen Dispersion eignen sich die dem Fachmann bekannten Methoden, wie beispielsweise Dissolver, Kugelmühlen, Rotor-Stator-Maschinen, Planetenkneter oder Hochenergiemühlen. Hochenergiemühlen können immer dann vorteilhaft eingesetzt werden, wenn Dispersionen mit besonders kleinen Aggregatdurchmessern hergestellt werden sollen.

### Beispiele

Die BET-Oberfläche wird bestimmt nach DIN 66131.

Bestimmung der Wet-in-Zeit: Zu 15 g Siliciumdioxidpulver werden 50 g Wasser hinzugefügt und bei 500 U/min mittels eines Dissolvers bei 23°C gerührt. Es wird die Zeit gemessen, bis das Pulver benetzt ist. Die Bestimmung erfolgt visuell.

Die Viskosität der Dispersionen wird mit einem Rotations-Rheometer der Firma Physica Model 300 und dem Messbecher CC 27 bei 25°C ermittelt. Der Viskositätswert wird bei einer Schergeschwindigkeit von 10 1/sec. ermittelt. Diese Schergeschwindigkeit liegt in einem Bereich, in dem die Viskosität der erzeugten Dispersionen praktisch unabhängig von der Scherbeanspruchung ist.

Die in der Dispersion vorliegende Partikelgröße wird mittels dynamischer Lichtstreuung bestimmt. Verwendet wird das Gerät Zetasizer 3000 HSa (Malvern Instruments, UK). Angegeben wird der volumengewichtete Median-Wert der Peakanalyse.

### Beispiel 1: Herstellung eines Siliciumdioxidpulvers

95 kg/h Siliciumtetrachlorid und 5 kg/h Trichlorsilan (TCS) werden verdampft und mittels Stickstoff in die Mischkammer eines Brenners überführt. Gleichzeitig werden 34 Nm³/h (1,5 kmol/h) Wasserstoff und 70 Nm³/h (3,1 kmol/h) Primärluft in die Mischkammer gegeben. Das Gemisch weist eine Temperatur von 90°C auf. Es wird gezündet und in einer Flamme in eine Reaktionskammer hinein verbrannt. Die Austrittsgeschwindigkeit des Gemisches aus dem Brenner beträgt 25,8 m/s. Zusätzlich wird 24 Nm³/h (1,1 kmol/h) Sekundärluft, die die Flamme umgibt, in die Reaktionskammer eingebracht. Das verhältnis von Sekundärluft zu Primärluft beträgt 0,34.

Die Reaktionsgase und das entstandene Siliciumdioxid werden durch Anlegen eines Unterdruckes durch ein Kühlsystem gesaugt und dabei auf Werte zwischen 100 und 160°C abgekühlt. In einem Filter oder Zyklon wird der Feststoff vom Abgasstrom abgetrennt und nachfolgend bei einer Temperatur von 555°C mit Wasserdampf behandelt.

Die Beispiele 2 bis 11 werden analog durchgeführt.

Tabelle 2 gibt die Einsatzstoffe und Mengen der Beispiele 1 bis 11 wieder.

Tabelle 3 zeigt die berechneten Werte für Reaktionsenthalpie, Wärmekapazität und adiabate Flammentemperatur.

Tabelle 4 zeigt analytische Daten der hergestellten Siliciumdioxidpulver, sowie zweier kommerziell erhältlicher pyrogen hergestellter Siliciumdioxidpulver (Beispiele 12 und 13).

Die Beispiele 1 bis 5 ergeben erfindungsgemäße Pulver. Die Beispiele 5 bis 10 sind Vergleichsbeispiele.

In Beispiel 2 werden drei Siliciumkomponenten eingesetzt.

In den Beispielen 3 und 4 werden hohe beziehungsweise niedrige Anteile der ersten Siliciumkomponente Siliciumtetrachlorid eingesetzt.

In Beispiel 5 wird innerhalb des beanspruchten Bereiches ein hohes Verhältnis Sekundärluft/Primärluft eingestellt.

In den Beispielen 6 und 7 sind Einstellungen gewählt, die zu einer adiabaten Flammentemperatur ausserhalb des beanspruchten Bereiches führen.

In Beispiel 8 wird nur eine Siliciumverbindung (SiCl₄) eingesetzt.

In Beispiel 9 ist das Verhältnis von Siliciumtetrachlorid zu den weiteren Siliciumverbindungen ausserhalb des beanspruchten Bereiches.

In Beispiel 10 wird keine Sekundärluft zugeführt.

In Beispiel 11 ist das Verhältnis Sekundärluft/Primärluft ausserhalb des beanspruchten Bereiches.

Die Beispiele zeigen, dass das erfindungsgemäße Siliciumdioxidpulver aus den Beispielen 1 bis 5 deutlich geringere Wet-in Zeiten aufweist, als die Muster aus den Vergleichsbeispielen.

Weiterhin zeigen die Beispiele, dass die mittlere Aggregatfläche, der mittlere ECD, der mittlere Aggregatumfang, der mittlere maximaler Aggregatdurchmesser und der mittlere minimaler Aggregatdurchmesser der erfindungsgemäßen Siliciumdioxidpulver kleiner sind als die entsprechenden Werte der Vergleichsbeispiele.

Die Beispiele 1 bis 5 zeigen weiterhin, wie ein bestimmter enger Bereich der adiabaten Flammentemperatur, hier von 1821 bis 1851°C, durch Variation der Einsatzstoffmengen erhalten werden kann.

Weiterhin zeigen die Vergleichsbeispiele 6 und 7, dass bei gleicher Zusammensetzung der Siliciumverbindungen wie in Beispiel 1, keine erfindungsgemäßen Siliciumdioxidpulver erhalten werden. Die erhaltenen Pulver weisen BET-Oberflächen ausserhalb des beanspruchten Bereiches auf. In den Vergleichsbeispielen 6 und 7 sind die adiabaten Flammtemperaturen ausserhalb des beanspruchten Bereiches.

In den Vergleichsbeispielen 8 bis 10 sind zwar die adiabaten Flammentemperaturen innerhalb des beanspruchten Bereiches, jedoch werden keine erfindungsgemäßen Siliciumdioxidpulver erhalten:
In den Beispielen 8 und 9 ist die Zusammensetzung der Siliciumverbindungen ausserhalb des beanspruchten Bereiches. In Beispiel 10 wird keine Sekundärluft zugegeben. Wie der Tabelle 4 zu entnehmen ist, werden Pulver erhalten, deren mittlere Aggregatflächen, mittlere ECD, mittlere Aggregatumfänge, mittlere maximale Aggregatdurchmesser und mittlere minimale Aggregatdurchmesser größer sind, als die der erfindungsgemäßen Siliciumdioxidpulver.

In Beispiel 11 ist das Verhältnis Sekundärluft/Primärluft mit 4,11 ausserhalb des beanspruchten Bereiches. Das erhaltene Siliciumdioxidpulver weist eine BET-Oberfläche weit ausserhalb des beanspruchten Bereiches auf.

### Beispiel 14: Dispersion, saurer pH-Bereich

In einem 60 1 Edelstahl-Ansatzbehälter werden 36 kg VE-Wasser vorgelegt. Anschließend werden mit Hilfe des Saugrüssels der Ystral Conti-TDS 3 unter Scherbedingungen 6,4 kg des Siliciumdioxidpulvers aus Beispiel 1 eingezogen und nach Beendigung des Einziehens noch bei 3000 U/min 15 min lang nachgeschert.

### Beispiel 15: Dispersion, alkalischer pH-Bereich

In einem 60 l Edelstahl-Ansatzbehälter werden 35,5 kg VE-Wasser und 52 g einer 30%igen KOH-Lösung vorgelegt. Anschließend werden mit Hilfe des Saugrüssels der Ystral Conti-TDS 3 unter Scherbedingungen 6,4 kg des Siliciumdioxidpulvers aus Beispiel 1 eingezogen und nach Beendigung des Einziehens noch bei 3000 U/min 15 min lang nachgeschert. Während dieser 15 minütigen Dispergierung wird der pH-Wert durch Zugabe von weiterer KOH-Lösung auf einem pH-Wert von 10,4 eingestellt und gehalten. Hierbei wurden weitere 43 g KOH-Lösung verwendet und durch Zugabe von 0,4 kg Wasser eine Feststoffkonzentration von 15 Gew.-% eingestellt.

### Beispiel 16: Dispersion mit hohem Feststoffgehalt

In einem 60 1 Edelstahl-Ansatzbehälter werden 35,5 kg VE-Wasser mit Tetramethylammoniumhydroxid-Lösung (25%ig) auf einen pH-Wert von 11 eingestellt. Anschließend werden mit Hilfe des Saugrüssels der Ystral Conti-TDS 3 unter Scherbedingungen 37 kg des Siliciumdioxidpulvers aus Beispiel 1 eingezogen und nach Beendigung des Einziehens noch bei 3000 U/min 15 min lang nachgeschert. Während dieser 15 minütigen Dispergierung wird der pH-Wert durch Zugabe von Tetramethylammoniumhydroxid-Lösung auf einem pH-Wert zwischen 10 und 11 gehalten. Durch Zugabe der restlichen benötigten Wassermenge wird eine Feststoffkonzentration von 50 Gew.-% eingestellt. Die Dispersion weist auch nach einer Lagerzeit von 6 Monaten keine Verdickung oder Sedimentation auf.

Die physikalisch-chemischen Parameter der Dispersionen sind in Tabelle 5 wiedergegeben.

**Tabelle 2: Einsatzstoffe und Einsatzmengen**

| | | **gemäß Erfindung** | | | | | **Vergleich** | | | | | |
|---|---|---|---|---|---|---|---|---|---|---|---|---|
| **Beispiel** | | **1** | **2** | **3** | **4** | **5** | **6** | **7** | **8** | **9** | **10** | **11** |
| Siliciumtetrachlorid | kg/h | 95 | 85 | 76 | 52 | 55 | 85 | 85 | 80 | 24 | 95 | 76 |
| 2. Siliciumkomponente^{($)} | | TCS | TCS | MTS | TCS | PTS | TCS | TCS | | MTS | TCS | MTS |
| | kg/h | 5 | 2,5 | 4 | 28 | 25 | 2,5 | 2,5 | 0 | 56 | 5 | 4 |
| 3. Siliciumkomponente^{($)} | | | DCS | | | | DCS | DCS | | | | |
| | kg/h | 0 | 1,5 | 0 | 0 | 0 | 1,5 | 1,5 | 0 | 0 | | 0 |
| Wasserstoff | Nm³/h | 33 | 40 | 38 | 35 | 10 | 44 | 36 | 37 | 35 | 33 | 38 |
| Primärluft | Nm³/h | 70 | 95 | 95 | 100 | 40 | 95 | 95 | 86 | 175 | 96 | 95 |
| Sekundärluft | Nm³/h | 24 | 25 | 25 | 25 | 95 | 25 | 25 | 25 | 25 | 0 | 390 |
| Sekundärluft/ Primärluft | | 0,34 | 0,26 | 0,26 | 0,25 | 2,38 | 0,26 | 0,26 | 0,29 | 0,15 | - | 4,11 |
| Eingangstemperatur(*) | °C | 90 | 90 | 90 | 90 | 90 | 90 | 90 | 90 | 90 | 90 | 90 |
| v_{Brermer}⁽⁺⁾ | m/s | 25,8 | 31,4 | 30,7 | 31,3 | 13,4 | 33,4 | 31,0 | 28,4 | 47,9 | 25,7 | 31,8 |

| | | | | | | | | | | | | |
|---|---|---|---|---|---|---|---|---|---|---|---|---|
| (*) Für Gemisch aus H₂, Primärluft SiCl₄, 2. und ggf. 3. Siliciumkomponente ($) MTCS = Methyltrichlorsilan; TCS = Trichlorsilan; DCS = Dichlordisilan, MTS = Methyltrichlorsilan; PTS = n-Propyltrichlorsilan (+) = Austrittsgeschwindigkeit aus Brenner | | | | | | | | | | | | |

**Tabelle 3: Reaktionsenthalpie, Wärmekapazität und adiabate Flammentemperatur**

| | | **gemäß Erfindung** | | | | | **Vergleich** | | | | | |
|---|---|---|---|---|---|---|---|---|---|---|---|---|
| **Beispiel** | | **1** | **2** | **3** | **4** | **5** | **6** | **7** | **8** | **9** | **10** | **11** |
| Summe Reaktionsenthalpien der Teilreaktionen | KW | -124,3 | -144,0 | -137,8 | -140,6 | -148,0 | -156,0 | -132,0 | -128,8 | -207 | -124,4 | -138,1 |
| Wärmekapazität Produkte | KJ/s·K | 0,07 | 0,08 | 0,08 | 0,08 | 0,08 | 0,08 | 0,08 | 0,08 | 0,12 | 0,07 | 0,24 |
| adiabate Flammtemperatur | °C | 1849 | 1851 | 1823 | 1821 | 1860 | 1967 | 1731 | 1807 | 1854 | 1848 | 660 |

**Tabelle 4 : Analytische Daten der Siliciumdioxidpulver**

| | | **gemäß Erfindung** | | | | | **Vergleich** | | | | | | | |
|---|---|---|---|---|---|---|---|---|---|---|---|---|---|---|
| **Beispiel** | | **1** | **2** | **3** | **4** | **5** | **6** | **7** | **8** | **9** | **10** | **11** | **12^{($)}** | **13^{($)}** |
| BET-Oberfläche | m²/g | 90 | 88 | 92 | 89 | 91 | 58 | 151 | 90 | 92 | 89 | >450 | 87 | 91 |
| mittl. Aggregatfläche | nm² | 16315 | 14634 | 12568 | 19851 | 12114 | n.b. | n.b. | 24568 | 23546 | 32157 | n.b. | 21165 | 29771 |
| mittl. ECD | nm | 114 | 109 | 104 | 121 | 102 | n.b. | n.b. | 151 | 145 | 165 | n.b. | 135 | 161 |
| mittl. Aggregatumfang | nm | 1227 | 1159 | 1125 | 1289 | 1107 | n.b. | n.b. | 1501 | 1498 | 1916 | n.b. | 1458 | 1711 |
| mittl. max. Aggregatdurchmesser | nm | 218 | 208 | 201 | 248 | n.b. | n.b. | n.b. | 276 | 271 | 325 | n.b. | 255 | 296 |
| mittl. min. Aggregatdurchmesser | nm | 133 | 118 | 108 | 150 | n.b. | n.b. | n.b. | 172 | 169 | 211 | n.b. | 160 | 185 |
| mittl. Primärpartikeldurchmesser | nm | 14,6 | 13,9 | 13,6 | 14,6 | n.b. | n.b. | n.b. | 15,7 | 15,3 | 19,8 | n.b. | 15,6 | 19,0 |
| C-Gehalt | ppm | 5 | 0 | 15 | 2 | n.b. | n.b. | n.b. | 1 | 33 | n.b. | n.b. | n.b. | n.b. |
| Cl-Gehalt | ppm | 15 | 30 | 27 | 56 | n.b. | n.b. | n.b. | 75 | 42 | n.b. | n.b. | n.b. | n.b. |
| Wet-in Zeit | sec | 7 | 8 | 6 | 11 | 8 | n.b. | n.b. | 88 | 165 | 201 | n.b. | 28 | 195 |

| | | | | | | | | | | | | | | |
|---|---|---|---|---|---|---|---|---|---|---|---|---|---|---|
| ($): Cab-O-Sil^{®} L90, Cabot ; (§) Aerosil^{®} 90, Degussa | | | | | | | | | | | | | | |

**Tabelle 5: Physikalisch-chemische Daten der Dispersionen**

| **Bspl.** | **Konzentration** | **pH-Wert** | **Viskosität* (10s⁻¹)** |
|---|---|---|---|
| | [Gew.-%] | | [mPas] |
| 14 | 15 | 3,7 | 8,8 |
| 15 | 15 | 10,4 | 6,9 |
| 16 | 50 | 10,3 | 245 |

| | | | |
|---|---|---|---|
| * Viskosimeter: Fa. Physika | | | |

## Patentansprüche

1. Pyrogen hergestelltes Siliciumdioxidpulver, in Form von Aggregaten von Primärpartikeln,
**dadurch gekennzeichnet,**
**dass**
- es eine BET-Oberfläche von 90 ± 15 m²/g besitzt und die Aggregate
- eine mittlere Fläche von 10000 - 20000 nm²,
- einen mittleren, äquivalenten Kreisdurchmesser (ECD = Equivalent Circle Diameter) von 90 - 130 nm und
- einen mittleren Umfang von 1000 - 1400 nm aufweisen.

2. Pyrogen hergestelltes Siliciumdioxidpulver nach Anspruch 1,
**dadurch gekennzeichnet,**
**dass** die Aggregate
- eine mittlere Fläche von 12000 - 18000 nm²,
- einen mittleren, äquivalenten Kreisdurchmesser von 100
- 125 nm und
- einen mittleren Umfang von 1100 - 1300 nm aufweisen.

3. Pyrogen hergestelltes Siliciumdioxidpulver nach den Ansprüchen 1 oder 2,
**dadurch gekennzeichnet,**
**dass** der maximale Aggregatdurchmesser zwischen 200 und 250 nm und der minimale Aggregatdurchmesser zwischen 100 und 155 nm liegt.

4. Pyrogen hergestelltes Siliciumdioxidpulver nach den Ansprüchen 1 bis 3,
**dadurch gekennzeichnet,**
**dass** der Chloridgehalt kleiner als 250 ppm ist.

5. Pyrogen hergestelltes Siliciumdioxidpulver nach den Ansprüchen 1 bis 4,
**dadurch gekennzeichnet,**
**dass** der Kohlenstoffgehalt kleiner als 100 ppm ist.

6. Verfahren zur Herstellung des Siliciumdioxidpulvers gemäß den Ansprüchen 1 bis 5,
**dadurch gekennzeichnet,**
**dass** man
- ein Gemisch von Siliciumverbindungen, getrennt oder gemeinsam, verdampft, die Dämpfe mittels eines Traggases in eine Mischkammer überführt, mit
- SiCl₄ als erster Komponente mit einem Anteil 60 bis 95 Gew.-%, bezogen auf das Gemisch, und
- einer zweiten Komponente ausgewählt aus der Gruppe umfassend H₃SiCl, H₂SiCl₂, HSiCl₃, CH₃SiCl₃, (CH₃)₂SiCl₂, (CH₃)₃SiCl, (n-C₃H₇)SiCl₃, mit einem Anteil von 5 bis 40 Gew.-%, bezogen auf das Gemisch,
- und getrennt hiervon ein Brenngas, Primärluft, die gegebenenfalls mit Sauerstoff angereichert und/oder vorerhitzt sein kann, in die Mischkammer überführt,
- das Gemisch aus dem Dampf der Siliciumchloride, Brenngas und Primärluft in einem Brenner zündet und die Flamme in eine Reaktionskammer hinein verbrennt,
- Sekundärluft, die die Flamme umgibt, in die Reaktionskammer einbringt, wobei das Verhältnis von Sekundärluft/Primärluft in einem Bereich von 0,1 bis 3, bevorzugt 0,25 bis 2, liegt,
- anschließend den Feststoff von gasförmigen Stoffen abtrennt, und nachfolgend den Feststoff mit Wasserdampf behandelt,
wobei
- die Gesamtmenge an Sauerstoff mindestens ausreichend ist zur vollständigen Verbrennung des Brenngases und der Siliciumverbindungen und
- die Menge der Einsatzstoffe bestehend aus Siliciumverbindungen, Brenngas, Primärluft und Sekundärluft so gewählt ist, dass eine adiabate Flammentemperatur T_{ad} von 1800 bis 1880°C resultiert, mit
T_{ad} = Temperatur Einsatzstoffe + Summe der Reaktionsenthalpien der Teilreaktionen /Wärmekapazität der Stoffe, die die Reaktionskammer verlassen, umfassend Siliciumdioxid, Wasser, Chlorwasserstoff, Kohlendioxid, Sauerstoff, Stickstoff, und gegebenenfalls des Traggases, wenn dieses nicht Luft oder Stickstoff ist,
wobei die spezifische Wärmekapazität dieser Stoffe bei 1000°C zugrunde gelegt wird.

7. Verfahren nach Anspruch 6,
**dadurch gekennzeichnet,**
**dass** die Temperatur der Einsatzstoffe 90°C ± 40°C ist.

8. Verfahren nach den Ansprüchen 6 oder 7,
**dadurch gekennzeichnet,**
**dass** die Austrittsgeschwindigkeit des Reaktionsgemisches aus der Mischkammer in den Reaktionskammer 10 bis 80 m/s ist.

9. Verwendung des pyrogen hergestellten Siliciumdioxidpulvers gemäß der Ansprüche 1 bis 5 als Füllstoff in Kautschuk, Silikonkautschuk und Kunststoffen, zur Einstellung der Rheologie in Farben und Lacken, als Träger für Katalysatoren.

## Claims

1. Fumed silica powder in the form of aggregates of primary particles,
**characterized in that**
- it has a BET surface area of 90 ± 15 m²/g and the aggregates
- have a mean area of 10000 - 20000 nm²,
- a mean equivalent circle diameter (ECD) of 90 - 130 nm and
- a mean circumference of 1000 - 1400 nm.

2. Fumed silica powder according to Claim 1, **characterized in that**
the aggregates
- have a mean area of 12000 - 18000 nm²,
- a mean equivalent circle diameter of 100 - 125 nm and
- a mean circumference of 1100 - 1300 nm.

3. Fumed silica powder according to Claim 1 or 2, **characterized in that**
the maximum aggregate diameter is between 200 and 250 nm and the minimum aggregate diameter is between 100 and 155 nm.

4. Fumed silica powder according to Claims 1 to 3, **characterized in that**
the chloride content is less than 250 ppm.

5. Fumed silica powder according to Claims 1 to 4, **characterized in that**
the carbon content is less than 100 ppm.

6. Process for preparing the silica powder according to Claims 1 to 5,
**characterized in that**
- a mixture of silicon compounds, separately or together, is evaporated, the vapours are transferred by means of a carrier gas into a mixing chamber, with
- SiCl₄ as the first component with a proportion of 60 to 95% by weight, based on the mixture, and
- a second component selected from the group comprising H₃SiCl, H₂SiCl₂, HSiCl₃, CH₃SiCl₃, (CH₃)₂SiCl₂, (CH₃)₃SiCl, (n-C₃H₇)SiCl₃, with a proportion of 5 to 40% by weight, based on the mixture,
- and, separately thereof, a combustion gas, primary air which may optionally be enriched with oxygen and/or preheated, is transferred into the mixing chamber,
- the mixture of the vapour of the silicon chlorides, combustion gas and primary air is ignited in a burner and the flame burns into a reaction chamber,
- secondary air which surrounds the flame is introduced into the reaction chamber, where the ratio of secondary air/primary air is within a range from 0.1 to 3, preferably 0.25 to 2,
- then the solid is removed from the gaseous substances, and subsequently the solid is treated with steam,
wherein
- the total amount of oxygen is at least sufficient for complete combustion of the combustion gas and of the silicon compounds and
- the amount of the feedstocks consisting of silicon compounds, combustion gas, primary air and secondary air is selected so as to result in an adiabatic flame temperature T_{ad} of 1800 to 1880°C, where
T_{ad} = temperature of feedstocks + sum of the reaction enthalpies of the component reactions/heat capacity of the substances which leave the reaction chamber, comprising silica, water, hydrogen chloride, carbon dioxide, oxygen, nitrogen, and optionally the carrier gas if it is not air or nitrogen,
this being based on the specific heat capacity of these substances at 1000°C.

7. Process according to Claim 6,
**characterized in that**
the temperature of the feedstocks is 90°C ± 40°C.

8. Process according to Claim 6 or 7,
**characterized in that**
the exit velocity of the reaction mixture out of the mixing chamber into the reaction chamber is 10 to 80 m/s.

9. Use of the fumed silica powder according to Claims 1 to 5 as a filler in rubber, silicone rubber and plastics, for adjusting the rheology in paints and coatings, as a support for catalysts.

## Revendications

1. Poudre de dioxyde de silicium produite par pyrogénation, sous forme d'agrégats de particules primaires, **caractérisée en ce qu'**elle présente
- une surface BET de 90 ± 15 m²/g et les agrégats présentent
- une surface moyenne de 10 000 - 20 000 nm²,
- un diamètre de cercle équivalent (ECD = *Equivalent Circle Diameter*) moyen de 90 - 130 nm et
- une circonférence moyenne de 1 000 - 1 400 nm.

2. Poudre de dioxyde de silicium produite par pyrogénation selon la revendication 1, **caractérisée en ce que** les agrégats présentent
- une surface moyenne de 12 000 - 18 000 nm²,
- un diamètre de cercle équivalent moyen de 100 - 125 nm et
- une circonférence moyenne de 1 100 - 1 300 nm.

3. Poudre de dioxyde de silicium produite par pyrogénation selon la revendication 1 ou 2, **caractérisée en ce que** le diamètre maximum d'agrégat est compris entre 200 et 250 nm et le diamètre minimum d'agrégat est compris entre 100 et 155 nm.

4. Poudre de dioxyde de silicium produite par pyrogénation selon les revendications 1 à 3, **caractérisée en ce que** la teneur en chlore est inférieure à 250 ppm.

5. Poudre de dioxyde de silicium produite par pyrogénation selon les revendications 1 à 4, **caractérisée en ce que** la teneur en carbone est inférieure à 100 ppm.

6. Procédé pour la production de la poudre de dioxyde de silicium selon les revendications 1 à 5, **caractérisé en ce que**
- on vaporise un mélange de composés de silicium, séparément ou ensemble, on transfère les vapeurs, au moyen d'un gaz porteur, dans une chambre de mélange, le mélange comportant
- SiCl₄ en tant que premier composant, en une proportion de 60 à 95 % en poids, par rapport au mélange, et
- un second composant, choisi dans le groupe comprenant H₃SiCl, H₂SiCl₂, HSiCl₃, CH₃SiCl₃, (CH₃)₂SiCl₂, (CH₃)₃SiCl, (n-C₃H₇)SiCl₃, en une proportion de 5 à 40 % en poids, par rapport au mélange ;
- et séparément de celui-ci on transfère dans la chambre de mélange un gaz de combustion, de l'air primaire, qui peut éventuellement être enrichi avec de l'oxygène et/ou préchauffé,
- on allume dans un brûleur le mélange constitué de la vapeur des chlorures de silicium, de gaz de combustion et d'air primaire et la flamme brûle à l'intérieur d'une chambre de réaction,
- on introduit dans la chambre de réaction de l'air secondaire qui entoure la flamme, le rapport air secondaire/air primaire se situant dans une plage allant de 0,1 à 3, de préférence de 0,25 à 2,
- puis on sépare la matière solide des substances gazeuses, et ensuite on traite la matière solide par de la vapeur d'eau,
où
- la quantité totale d'oxygène est au moins suffisante pour la combustion totale du gaz de combustion et des composés siliciés et
- la quantité des matières premières consistant en composés siliciés, gaz de combustion, air primaire et air secondaire est choisie de manière qu'il en résulte une température de flamme adiabatique T_{ad} de 1 800 à 1 880 °C, où
T_{ad} = température des matières premières + somme des enthalpies de réaction des réactions partielles / capacité calorifique des substances qui quittent la chambre de réaction, comprenant dioxyde de silicium, eau, chlorure d'hydrogène, dioxyde de carbone, oxygène, azote et éventuellement le gaz porteur, si celui-ci n'est pas l'air ni l'azote,
en prenant pour base la capacité calorifique spécifique de ces substances à 1 000 °C.

7. Procédé selon la revendication 6, **caractérisé en ce que** la température des matières premières est de 90 °C ± 40 °C.

8. Procédé selon la revendication 6 ou 7, **caractérisé en ce que** la vitesse de sortie du mélange réactionnel, sortant de la chambre de mélange pour pénétrer dans la chambre de réaction, est de 10 à 80 m/s.

9. Utilisation de la poudre de dioxyde de silicium produite par pyrogénation selon les revendications 1 à 5, comme charge dans le caoutchouc, le caoutchouc de silicone et les matériaux synthétiques, pour le réglage de la rhéologie dans les peintures et les laques, comme support pour des catalyseurs.
